# FASCICULE DE BREVET EUROPEEN

(11) **EP 2 248 281 B1**
(45) Date de publication et mention de la délivrance du brevet: **22.11.2017**
(21) Numéro de dépôt: 09715951.1
(22) Date de dépôt: 06.02.2009
(51) Int. Cl.: H04B 7/185

(54) **DISPOSITIFS POUR LA TRANSMISSION POINT-À POINT DE DONNÉES, SANS FIL ET À HAUT DÉBIT, ENTRE UN VÉHICULE EN STATIONNEMENT ET UNE INFRASTRUCTURE FIXE**
VORRICHTUNG FÜR DRAHTLOSE PUNKT-ZU-PUNKT- UND HOCHGESCHWINDIGKEITSÜBERTRAGUNG VON DATEN ZWISCHEN EINEM GEPARKTEN FAHRZEUG UND EINER FIXEN INFRASTRUKTUR
DEVICE FOR POINT-TO-POINT WIRELESS AND HIGH RATE TRANSMISSION OF DATA BETWEEN A PARKED VEHICLE AND A FIXED INFRASTRUCTURE

(30) Priorité: 26.02.2008 FR 0851205
(43) Date de publication de la demande: 10.11.2010
(73) Titulaire: AIRBUS OPERATIONS, 31060 Toulouse (FR)
(72) Inventeur: DURAND, Frédéric, F-31300 Toulouse (FR); GRUYER, Pierre, 31860 Labarthe sur Leze (FR); ABADIE, Julien, F-31100 Toulouse (FR); TURPAUD, Christian, F-31470 Fonsorbes (FR); SALETZKI, Sébastien, 31840 Aussonne (FR)
(74) Mandataire: Santarelli
(86) Numéro de dépôt international: PCT/FR2009/050194
(87) Numéro de publication internationale: WO 2009/106776

(56) Documents cités:
- US-A1- 2003 130 769
- MARTZAKLIS K.: "Weather Information Communications (WINCOMM) Element Briefing : Ultra-Wideband (UWB) Technology for Aircraft Data Communications (Slide 51)" WEATHER ACCIDENT PREVENTION ANNUAL PROJECT REVIEW, [Online] 23 mai 2000 (2000-05-23), - 25 mai 2000 (2000-05-25) XP002498263 Hampton, VA, USA Extrait de l'Internet: URL:http://gltrs.grc.nasa.gov/reports/2000 /CP-2000-210207/NASA/NASA07/sld051.htm> [extrait le 2008-10-03]
- ELY J J ET AL: "Ultrawideband electromagnetic interference to aircraft radios" 21TH. DASC. THE 21TH. DIGITAL AVIONICS SYSTEMS CONFERENCE PROCEEDINGS. IRVINE, CA, OCT. 27 - 31, 2002; [DIGITAL AVIONICS SYSTEMS CONFERENCE], NEW YORK, NY : IEEE, US, vol. 2, 27 octobre 2002 (2002-10-27), pages 13.E.4-1-13.E.4-12, XP010616282 ISBN: 978-0-7803-7367-9
- DANIELS R C ET AL: "60 GHz wireless communications: emerging requirements and design recommendations", IEEE VEHICULAR TECHNOLOGY MAGAZINE, IEEE, US, vol. 2, no. 3, 1 September 2007 (2007-09-01), pages 41-50, XP011204979, ISSN: 1556-6072

## Description

La présente invention concerne la transmission de données entre un véhicule et un système fixe et plus particulièrement des dispositifs pour la transmission point-à-point de données, sans fil et à haut débit, entre un véhicule en stationnement et une infrastructure fixe.

De nombreux véhicules ont besoin, en stationnement, d'échanger des données avec une infrastructure fixe notamment pour des opérations de maintenance ou pour offrir aux passagers une connexion haut débit vers un réseau ouvert.

Il existe tout d'abord des solutions dites câblées selon lesquelles il est nécessaire d'effectuer une connexion physique entre le véhicule et l'infrastructure fixe. Par exemple, une liaison de type Ethernet utilisant des câbles en cuivre autorise un débit de l'ordre de cent mégabits par seconde. Cependant, alors que de telles solutions offrent un débit de transmission des données très élevé, elles nécessitent la présence d'un opérateur pour effectuer un tel branchement.

Par ailleurs, il existe des systèmes utilisant des technologies sans fil, notamment des technologies de transmission par infrarouge permettant des débits de transmission très élevés mais qui présentent des difficultés d'alignement, l'émetteur et le récepteur devant être positionnés selon une configuration très précise. Ces solutions sont également sensibles aux poussières ou autres salissures pouvant obstruer au moins partiellement l'émetteur et/ou le récepteur infrarouge.

D'autres solutions de transmission de données sans fil ont également été développées à partir des technologies de réseaux sans fil, par exemple des solutions WiFi (acronyme de *Wireless Fidelity* en terminologie anglo-saxonne, WiFi est une marque), ou des technologies de téléphonie cellulaire, permettant notamment à des dispositifs dans un aéronef d'échanger des données avec des stations de bases disposées dans un aéroport. Néanmoins, de telles technologies offrent des débits limités.

A titre d'illustration, pour l'exploitation d'aéronefs, de plus en plus d'informations doivent être échangées entre les systèmes d'une compagnie aérienne au sol et les aéronefs, en particulier lorsque ces derniers sont en escale à la passerelle d'un terminal ou en phase de maintenance en hangar.

Afin que la durée de l'escale ne soit pas directement soumise au temps nécessaire à l'échange d'informations entre le sol et le bord, les moyens de communications utilisés doivent être les plus performants possible, c'est-à-dire que le débit de transmission des informations doit être aussi élevé que possible.

Des solutions, appelées *gatelink* en terminologie anglo-saxonne, exploitant des technologies de réseaux locaux sans fil, connus sous le nom de WLAN (acronyme de *Wireless Local Area Network* en terminologie anglo-saxonne), par exemple de type WiFi, ou des technologies de téléphonie cellulaire, par exemple de type GPRS (sigle de *General Packet Radio Service* en terminologie anglo-saxonne) sont utilisées. Cependant, ces technologies n'offrent généralement pas des niveaux de qualité de service et de performance suffisants : la bande passante est réduite et doit être partagée entre tous les utilisateurs dans la zone de couverture.

Par ailleurs, ces technologies étant partagées et le réseau étant visible de plusieurs utilisateurs, la bande passante disponible diminue de manière difficilement prévisible en fonction du nombre d'utilisateurs.

Les solutions actuelles présentent de plus des problématiques de sécurité en raison de leur portée supérieure à quelques dizaines ou centaines de mètres, induisant des risques d'espionnage et d'attaques.

Il existe donc un besoin pour améliorer la qualité des connexions entre un véhicule en stationnement et une infrastructure fixe, notamment le débit et la sécurité de transmission des données.

L'invention permet de résoudre au moins un des problèmes exposés précédemment. L'article " Weather Information Communications (WINCOMM) Element Briefing : Ultra-Wideband (UWB) Technology for Aircraft Data Communications (Slide 51)", de K. Martzaklis et S. Struharik décrit un exemple de communications UWB entre aéronefs et terminaux. L'invention a ainsi pour objet un dispositif de communication sans fil à haut débit pour véhicule, ledit dispositif étant adapté à permettre l'échange de données entre au moins un système informatique dudit véhicule et au moins un système informatique d'une structure distincte dudit véhicule, ce dispositif comprenant au moins une antenne reliée à au moins un émetteur/récepteur lui-même relié audit au moins un système informatique dudit véhicule, ce dispositif étant adapté à échanger des données selon un mode de communication point-à-point à bande ultra large avec un dispositif de ladite structure comprenant au moins une antenne reliée à au moins un émetteur/récepteur lui-même relié audit au moins un système informatique de ladite structure lorsque ladite au moins une antenne dudit dispositif pour ledit véhicule est à proximité de ladite au moins une antenne dudit dispositif de ladite structure.

Le dispositif selon l'invention permet ainsi le transfert à haut débit de données en mettant en oeuvre une connexion à portée limitée entre un véhicule en stationnement et une station fixe, sans câblage, pour tous types de véhicules. La faible portée de la connexion sans fil permet au dispositif selon l'invention de protéger les données échangées tandis que la mise en oeuvre d'une technologie sans fil permet de limiter l'intervention humaine nécessaire à l'établissement de la connexion. La nature de la connexion permet de réduire les contraintes de positionnement entre les antennes du véhicule et de l'infrastructure, de limiter les problèmes de transmission liés à la salissure des émetteurs/récepteurs et de permettre l'utilisation d'antennes de faible encombrement.

De façon avantageuse, le dispositif comprend en outre des moyens de commande adaptés à activer ledit émetteur/récepteur dudit dispositif pour ledit véhicule selon un état particulier dudit véhicule afin de n'activer l'émetteur/récepteur que dans certaines conditions, par exemple lorsque le véhicule est stationné.

Ladite au moins une antenne dudit dispositif pour ledit véhicule est, de préférence, positionnée de façon à permettre l'établissement d'un lien radio direct avec ladite au moins une antenne dudit dispositif de ladite structure pour améliorer la connexion et augmenter le débit d'échange des données.

Selon un mode de réalisation particulier, ledit véhicule est un aéronef, ladite au moins une antenne dudit dispositif pour ledit véhicule étant placée, de préférence, dans une porte passager dudit aéronef, vers l'intérieur ou vers l'extérieur dudit aéronef, sur un montant de ladite porte, sur un hublot de ladite porte ou dans le fuselage dudit aéronef, à proximité de ladite porte, vers l'extérieur dudit aéronef. La position de l'antenne permet ainsi d'établir facilement une connexion radio avec une antenne située en bout d'une passerelle passager.

De façon avantageuse, ladite au moins une antenne dudit dispositif pour ledit véhicule est protégée par un matériau sensiblement perméable aux ondes radio.

L'invention a aussi pour objet un aéronef comprenant le dispositif décrit précédemment.

L'invention a également pour objet un dispositif de communication sans fil à haut débit pour structure, ledit dispositif étant adapté à permettre l'échange de données entre au moins un système informatique de ladite structure et au moins un système informatique d'un véhicule distinct de ladite structure, ce dispositif comprenant au moins une antenne reliée à au moins un émetteur/récepteur lui-même relié audit au moins un système informatique de ladite structure, ce dispositif étant adapté à échanger des données selon un mode de communication point-à-point à bande ultra large avec un dispositif dudit véhicule comprenant au moins une antenne reliée à au moins un émetteur/récepteur lui-même relié audit au moins un système informatique dudit véhicule lorsque ladite au moins une antenne dudit dispositif dudit véhicule est à proximité de ladite au moins une antenne dudit dispositif pour ladite structure.

Le dispositif selon l'invention permet ainsi le transfert à haut débit de données en mettant en oeuvre une connexion à portée limitée entre un véhicule en stationnement et une station fixe, sans câblage, pour tous types de véhicules. La faible portée de la connexion sans fil permet au dispositif selon l'invention de protéger les données échangées tandis que la mise en oeuvre d'une technologie sans fil permet de limiter l'intervention humaine nécessaire à l'établissement de la connexion. La nature de la connexion permet de réduire les contraintes de positionnement entre les antennes du véhicule et de l'infrastructure, de limiter les problèmes de transmission liés à la salissure des émetteurs/récepteurs et de permettre l'utilisation d'antennes de faible encombrement.

Selon un mode de réalisation particulier, ladite structure est une partie d'aéroport, ladite au moins une antenne et ledit au moins un émetteur/récepteur dudit dispositif pour ladite structure étant positionnés en bout de passerelle, ladite au moins une antenne dudit dispositif pour ladite structure étant adaptée à coopérer avec ladite au moins une antenne dudit dispositif pour ledit véhicule tel que décrit précédemment. La position de l'antenne permet ainsi d'établir facilement une connexion radio avec une antenne située à proximité d'une porte passager d'aéronef.

Toujours selon un mode de réalisation particulier, ladite au moins une antenne dudit dispositif pour ledit véhicule ou pour ladite structure est une antenne de type antenne patch en spirale équiangulaire ou une antenne biconique. L'utilisation d'une telle antenne permet une intégration aisée de celle-ci dans le véhicule ou dans la structure tout en offrant de bonnes performances de communication.

L'invention a aussi pour objet un procédé adapté à la mise en oeuvre du dispositif tel que décrit précédemment.

D'autres avantages, buts et caractéristiques de la présente invention ressortent de la description détaillée qui suit, faite à titre d'exemple non limitatif, au regard des dessins annexés dans lesquels :
- la figure 1 illustre schématiquement une vue aérienne d'un aéronef parqué à proximité d'une passerelle, permettant un transfert de données à haut débit entre l'aéronef et un système au sol ;
- la figure 2 illustre schématiquement, selon une coupe latérale, le positionnement d'une antenne UWB dans la porte avant passagers d'un aéronef ;
- la figure 3 représente schématiquement, en perspective, le bout d'une passerelle à côté de laquelle peut stationner un aéronef, ce bout de passerelle comprenant une antenne UWB permettant à un aéronef l'échange de données, à haut débit, avec un système au sol ;

- la figure 4 illustre schématiquement, en perspective, le positionnement d'une antenne UWB dans une cavité du fuselage d'un aéronef ;
- la figure 5, comprenant les figures 5a et 5b, présente deux exemples d'antennes pouvant être utilisées pour mettre en oeuvre l'invention ;
- la figure 6 illustre schématiquement les montages mis en oeuvre dans l'aéronef et dans la structure au sol ; et,
- la figure 7 illustre un exemple d'algorithme pouvant être mis en oeuvre dans un aéronef pour permettre un échange de données avec une structure au sol lorsque celui-ci est en stationnement.

Bien que la mise en oeuvre de l'invention telle que présentée dans la suite de la description fasse référence à l'aéronautique, cette solution peut être utilisée pour tout type de connexion entre un véhicule et une structure telle qu'une infrastructure fixe, notamment pour l'automobile, les bateaux, les missiles et les UAVs (sigle de *unmanned aerial vehicle* en terminologie anglo-saxonne).

Le dispositif selon l'invention permet de connecter un véhicule en stationnement à une infrastructure fixe pour le transfert de données, c'est-à-dire le chargement et le déchargement de données, selon une technologie sans fil à très haut débit de type point-à-point, par exemple de type WPAN (acronyme de *Wireless Personal Area Network* en terminologie anglo-saxonne). Il est rappelé qu'une connexion point-à-point est une liaison entre deux systèmes, ne permettant pas la connexion d'un système tiers contrairement à une connexion de type réseau.

Le véhicule est ici fixe et parqué à proximité d'une station d'émission/réception avec laquelle il communique en mode point-à-point. Les antennes des deux systèmes sont de préférence en vue directe, c'est-à-dire qu'il n'y a pas d'obstacle entre les deux. Il est d'ailleurs possible de mettre en oeuvre un dispositif de pointage pour améliorer l'efficacité de la liaison.

Pour permettre de très hauts débits, l'invention met en oeuvre une technologie sans fil utilisant une bande ultra large, aussi appelée UWB (sigle de *UltraWide Band* en terminologie anglo-saxonne), de type WPAN, répondant par exemple à la norme IEEE 802.15, selon lesquelles une communication radio point-à-point est établie à très courte portée et à haut ou très haut débit.

La technologie UWB utilise une modulation radio basée sur la transmission d'impulsions de très courte durée. En France, la bande de fréquence attribuée à l'UWB est comprise entre 4,8GHz et 6GHz tandis qu'aux Etats-Unis elle est comprise entre 3,1 GHz et 10,6GHz. Dans cette bande de fréquence, la densité de PIRE (acronyme de Puissance Isotrope Rayonnée Equivalente) maximale autorisée est de -41dBm/MHz. Le débit théorique d'une liaison UWB est de 480Mbits/s à 2 mètres et de 200Mbits/s à 4 mètres.

Un tel type de connexion est mis en oeuvre, par exemple, entre un aéronef et une passerelle ou entre un aéronef et un hangar de maintenance.

Bien que ces technologies large bande soient destinées à des usages domestiques tels que les échanges de données entre un ordinateur et une clé de stockage sans fil, elles présentent ici de nombreux avantages parmi lesquels performance et confidentialité.

Comparées aux solutions UWB/WPAN, les technologies de type WiFi, WiMAX ou 3G offrent des débits utiles bien moindres du fait de leur portée plus élevée et du plus grand nombre d'utilisateurs dans la zone de couverture utilisant la bande passante disponible. La mise en oeuvre de solutions UWB/WPAN permet d'optimiser l'utilisation de la bande passante disponible, entièrement dédiée à l'aéronef, et offre ainsi des performances ne pouvant pas être atteintes avec les technologies mentionnées précédemment.

De plus, la très courte portée des technologies large bande mises en oeuvre offre de meilleures conditions pour garantir la confidentialité des données échangées.

Par ailleurs, de telles technologies sans fil permettent une mise en oeuvre sans opérateur donc simple et rapide. Elles évitent également les usures de pièces mécaniques telles que des connecteurs.

Enfin, le risque sanitaire lié à la mise en oeuvre des technologies de type UWB/WPAN est limité du fait que celles-ci sont destinées à des usages domestiques.

Ces technologies peuvent être mise en oeuvre avec des antennes directives ayant, de préférence, un lobe principal étalé pour permettre une marge d'erreur de positionnement de l'ordre du mètre.

Les technologies très large bande, appelées *spread spectrum* en terminologie anglo-saxonne, autorisent des puissances d'émission faibles voire très faibles, limitant les interférences sur les systèmes existants et favorisant la confidentialité des échanges.

Après un éventuel contrôle d'authentification, le véhicule initie la communication. Les transferts de données peuvent alors débuter. Dans la variante aéronautique, la porte est avantageusement ouverte pour que les antennes sol et bord soient en vue l'une de l'autre.

Dans le cas d'une utilisation aéronautique, l'architecture pour le transfert des données mise en oeuvre comprend les éléments suivants :
- du coté aéronef, ces composants comprennent une antenne intégrée (par exemple sur une porte avant passagers) et un émetteur/récepteur lié à cette antenne et installé près de celle-ci (ici, dans la porte), l'émetteur/récepteur étant relié à un relais ou directement à un routeur installé, par exemple, en soute de l'aéronef, qui est connecté au système d'information du véhicule. Il convient de remarquer que le relais peut être câblé vers le routeur ou communiquer dans le même type de technologie sans fil (WPAN) ;
- coté infrastructure fixe, les composants comprennent également une antenne intégrée (par exemple sur la passerelle en face de la porte) et un émetteur/récepteur lié à cette antenne et installé près de celle-ci, l'émetteur/récepteur étant relié à un relais ou directement à un routeur installé sur la passerelle ou dans l'aéroport, qui est connecté au système d'information de l'aéroport ou de la compagnie aérienne.

Selon un mode de réalisation particulier, l'antenne de l'aéronef est placée dans la porte avant de celui-ci. Une telle implémentation permet d'éviter de modifier la structure de l'aéronef pour l'installation de cette antenne. Des études de produits UWB montrent que l'antenne peut être positionnée dans une cavité circulaire de l'ordre de dix centimètres de diamètre et ayant jusqu'à cinq à dix centimètres de profondeur, recouverte d'une couche d'époxy pour assurer l'étanchéité tout en offrant une bonne permissivité diélectrique.

Il convient de remarquer que l'installation de l'antenne dans une porte permet des gains conséquents en coût d'installation, en particulier pour les aéronefs en exploitation.

La position de l'antenne sur l'infrastructure fixe est étudiée de manière à ce que les deux antennes soient en vue directe lorsque la porte est ouverte.

L'utilisation de la technologie UWB permet, en particulier, d'autoriser des erreurs de positionnement d'antenne assez importante, de l'ordre de plusieurs dizaines de centimètres. Il n'est donc pas nécessaire de prévoir des mécanismes de positionnement d'antenne. L'établissement de la connexion en est facilité.

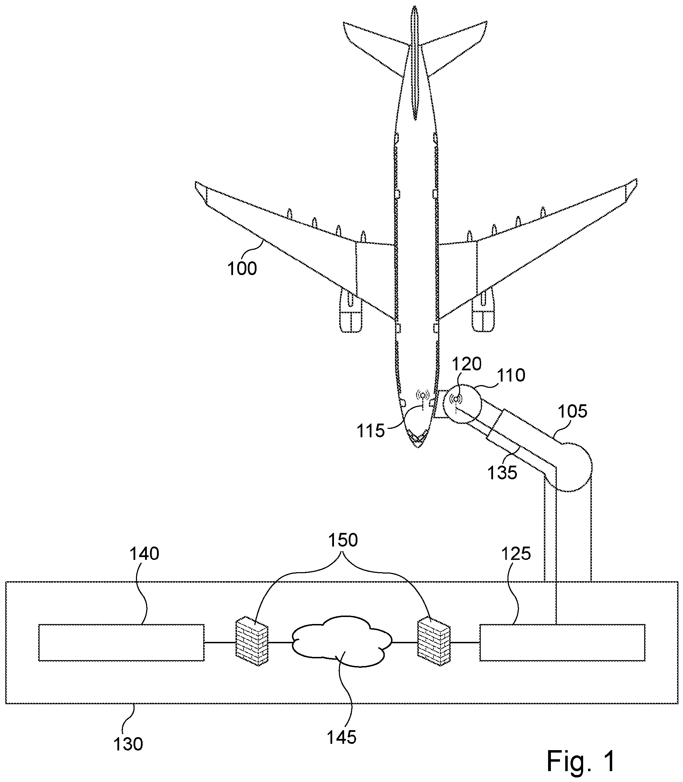

La figure 1 illustre schématiquement une vue aérienne d'un aéronef parqué à proximité d'une passerelle. Comme représenté, l'aéronef 100 est en stationnement à proximité d'une passerelle 105, de telle sorte qu'une porte de l'aéronef 100 soit en regard du bout 110 de la passerelle 105.

L'aéronef 100 comprend un antenne UWB 115, située à l'intérieur de celui-ci, de préférence à proximité de la porte avant et activée seulement si cette porte est ouverte. L'antenne UWB 115 est reliée à un système informatique de l'aéronef 100, par exemple au système de maintenance, à travers une interface de communication adaptée.

Le bout 110 de la passerelle 105 comprend une antenne UWB 120 positionnée, de préférence, en vue directe de l'antenne UWB 115.

Le module radio (non représenté) associé à l'antenne UWB 120 est connecté au réseau 125 du terminal d'aéroport 130 par un lien 135, ici un lien filaire. Le réseau 125 est connecté, par exemple, au réseau local 140 de la compagnie aérienne via un réseau 145 de type Internet à travers des pare-feux 150 (appelés *firewall* en terminologie anglo-saxonne).

De façon similaire, une antenne UWB, connectée au réseau de la compagnie locale, peut être placée sur un élément de structure, mobile ou non, amovible ou non, d'un hangar de maintenance pour être positionnée à proximité de la porte de l'aéronef 100 comprenant l'antenne UWB 115 lorsque l'aéronef est dans le hangar de maintenance.

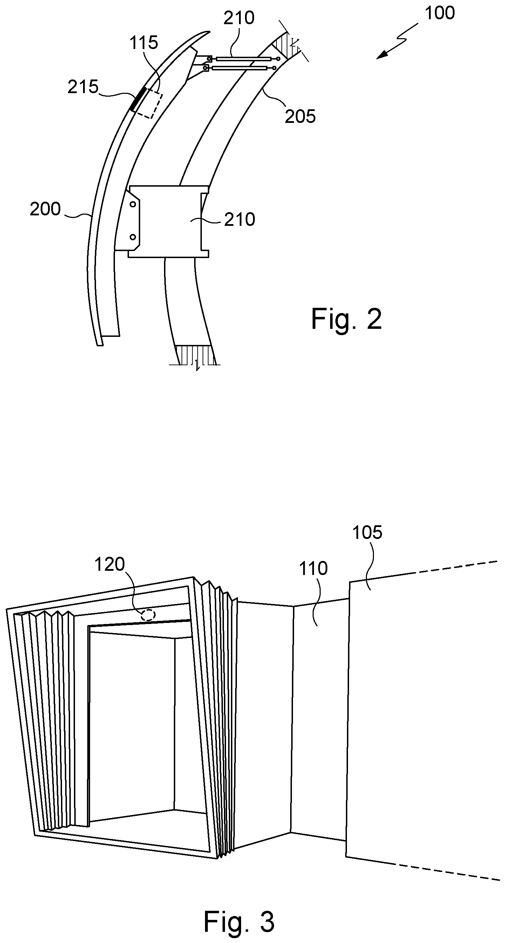

La figure 2 illustre schématiquement le positionnement de l'antenne UWB 115 dans une porte avant passagers 200 de l'aéronef 100. La porte 200 est ici reliée au fuselage 205 par l'intermédiaire de moyens d'ouverture 210. L'antenne UWB 115 est placée dans une cavité de la porte 200, ouverte vers l'extérieur, et protégée des agressions extérieures par une couche d'époxy 215.

La figure 3 représente schématiquement le bout 110 d'une passerelle 105 comprenant une antenne UWB 120. L'antenne UWB 120 est ici placée au dessus du passage de la passerelle, au milieu, de façon à être approximativement en face de l'antenne UWB 115 lorsque le bout de la passerelle est en position d'utilisation, face à la porte avant passagers 200 de l'aéronef 100.

Selon une première variante, l'antenne installée dans l'aéronef est collée sur le hublot de la porte avant passagers, ce qui permet une installation très facile. L'antenne est ici, de préférence, une antenne patch adhésive. Ces antennes étant en général des antennes omnidirectionnelles, les performances sont globalement moins bonnes que celles liées au mode de réalisation décrit précédemment. De plus, du fait de la présence de colle, ces antennes sont moins fiables. Cependant, cette solution présente l'avantage d'une installation très facile.

Selon une seconde variante, l'antenne est fixée sur la porte, sur sa face interne, c'est-à-dire vers la cabine de l'aéronef lorsque la porte est fermée. Une telle solution est particulièrement adaptée aux aéronefs pour lesquels la porte pivote vers l'extérieur (au lieu de se décaler en translation). Cette solution présente l'avantage d'une installation très simple, sans contrainte de pressurisation.

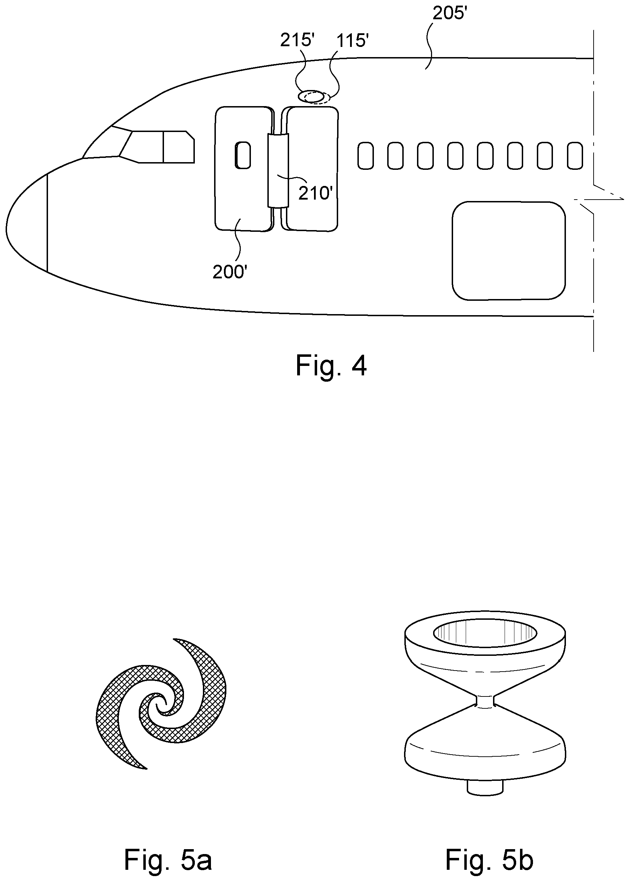

Selon une troisième variante, l'antenne est installée dans une cavité du fuselage de l'aéronef, comme illustré sur la figure 4. La porte avant 200' est ici reliée au fuselage 205' par l'intermédiaire de moyens d'ouverture 210'. L'antenne UWB 115' est placée dans une cavité du fuselage 205', ouverte vers l'extérieur, et protégée des agressions extérieures par une couche d'époxy 215'. Une telle réalisation peut être intéressante dans le cas où un positionnement sur la porte ne permet pas d'assurer la connexion avec l'antenne sol.

Selon une quatrième variante, l'antenne est fixée sur l'encadrement de la porte, avantageusement vers l'intérieur. Cette position présente l'avantage de ne modifier ni la structure de la porte, ni le fuselage de l'aéronef. Ce mode de réalisation est particulièrement avantageux dans le cas où le positionnement sur l'encadrement de la porte permet d'avoir une vue directe sur l'antenne montée sur l'infrastructure au sol.

Plusieurs types et plusieurs technologies d'antennes peuvent être utilisés. En particulier, il est possible d'utiliser des antennes directives ou des antennes omnidirectionnelles.

La figure 5, comprenant les figures 5a et 5b, présente deux exemples d'antennes pouvant être utilisées pour mettre en oeuvre l'invention. La figure 5a illustre une antenne patch en spirale équiangulaire tandis que la figure 5b représente une antenne biconique.

L'antenne patch en spirale équiangulaire de la figure 5a peut être utilisée dans l'aéronef et/ou en bout de passerelle. Il s'agit ici d'une antenne quasi directive ayant un gain de 9dB et une impédance de 59 ohms sur toute la bande, son rayon externe étant de 2,25cm et la longueur de ses bras étant de 6cm.

L'antenne biconique illustrée sur la figure 5b est constituée de deux cônes connectés sur leurs extrémités. De part sa forme évasée, cette antenne est une antenne large bande. Placés dans un plan vertical, ces deux cônes forment un diagramme de rayonnement omnidirectionnel.

Plusieurs simulations ont été effectuées à partir de ces deux antennes, en particulier les suivantes :
- utilisation d'un antenne omnidirectionnelle ayant un gain faible d'environ 0,5dB en bout de passerelle et d'une antenne directive ayant un gain de 9dB dans l'aéronef ;
- utilisation d'un antenne omnidirectionnelle ayant un gain faible d'environ 0,5dB en bout de passerelle et dans l'aéronef ; et,
- utilisation d'une antenne directive ayant un gain de 9dB en bout de passerelle et dans l'aéronef.

En résumé, en considérant une distance d'environ 2 mètres entre les antennes, en partant de l'hypothèse selon laquelle la liaison est établie en vue directe et en prenant en compte l'atténuation du signal dans la couche d'époxy utilisée pour protéger l'antenne de l'aéronef, le bilan des calculs montre que la solution mettant en oeuvre deux antennes directives est la plus pertinente. La distance d'environ 2 mètres entre les antennes est la distance typique envisagée pour cette application de transfert de données entre l'aéronef et la passerelle.

Cependant, les autres solutions fonctionnent également à condition que la distance entre les antennes soit compatible et que la sensibilité du récepteur soit ajustée.

Il faut remarquer que ces calculs sont basés sur la configuration selon laquelle l'antenne de l'aéronef est recouverte d'une couche d'époxy, c'est-à-dire la configuration la plus défavorable.

Pour améliorer la liaison, un amplificateur de signal peut être utilisé dans la chaîne de réception.

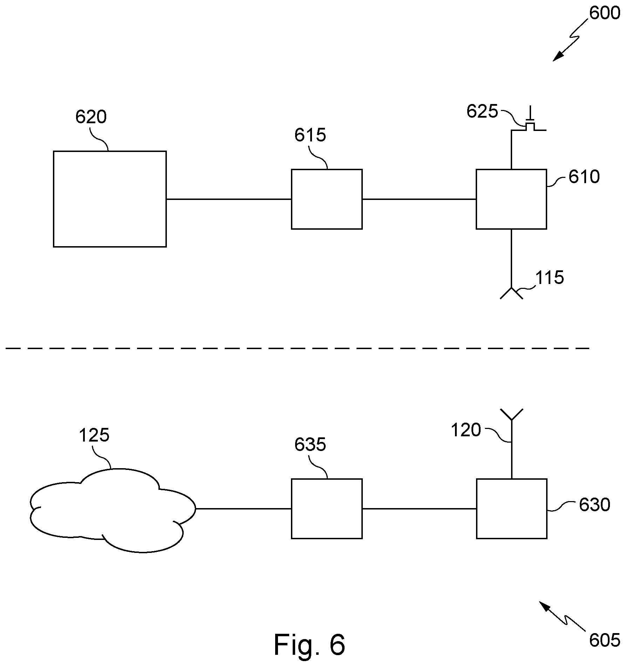

La figure 6 illustre schématiquement les montages mis en oeuvre dans l'aéronef et dans la structure au sol. La partie référencée 600 concerne les éléments mis en oeuvre dans l'aéronef tandis que la partie référencée 605 vise les éléments mis en oeuvre dans la structure au sol.

Comme indiqué précédemment une antenne 115 positionnée, par exemple, dans la porte avant passagers ou à proximité de celle-ci, est reliée à un émetteur/récepteur radio 610, lui-même connecté à un système informatique 620, par exemple un serveur de maintenance, via un routeur 615. L'émetteur/récepteur radio 610 est avantageusement relié à un dispositif de commande 625 permettant de n'activer l'émetteur/récepteur radio 610 que lorsque la porte dans laquelle, ou à proximité de laquelle, l'antenne 615 est installée est ouverte.

Selon un mode de réalisation particulier, l'émetteur/récepteur radio 610 permet de convertir un signal numérique en signal radio et réciproquement. A titre d'illustration, l'émetteur/récepteur radio 610 peut juxtaposer des trames Ethernet sur un lien radio formant, par exemple, un signal radio dans lequel le spectre de fréquence est divisé en canaux et dans lequel les informations sont transmises avec une modulation de type OFDM (sigle de *Orthogonal Frequency Division Multiplexing* en terminologie anglo-saxonne) dans chaque canal.

Le codage sur plusieurs canaux permet d'exploiter la diversité des fréquences et d'offrir une résistance aux interférences et aux trajets multiples.

La modulation OFDM consiste à diviser sur un grand nombre de porteuses le signal numérique à transmettre. Afin de réduire les phénomènes de réflexions multiples, une multitude de porteuses réparties dans un même canal est utilisée. Alors que les signaux des différentes porteuses se chevauchent, il n'y a pas d'interférence du fait de l'orthogonalité. Le signal à transmettre est généralement répété sur différentes fréquences porteuses. Ainsi, dans un canal de transmission avec des chemins multiples où certaines fréquences sont détruites du fait de la combinaison destructive de chemins, le système est capable de récupérer l'information perdue sur d'autres fréquences porteuses non détruites. La modulation OFDM est basée sur la transformée de Fourier rapide et son inverse.

Comme illustré sur la figure 6, la structure fixe au sol comprend une antenne 120 positionnée, par exemple, en bout de passerelle et reliée à un émetteur/récepteur radio 630, lui-même connecté à un réseau 125 tel que le réseau de l'aéroport, via un routeur 635. L'émetteur/récepteur radio 630 est ici similaire à l'émetteur/récepteur 610.

Avantageusement, lorsque le dispositif de commande 625 détecte l'ouverture de la porte dans laquelle ou à proximité de laquelle est positionnée l'antenne 115, l'émetteur/récepteur est activé et une instruction est transmise au système informatique 620 pour le prévenir. Une procédure de connexion est alors initiée pour permettre la transmission de données entre l'aéronef et la structure au sol.

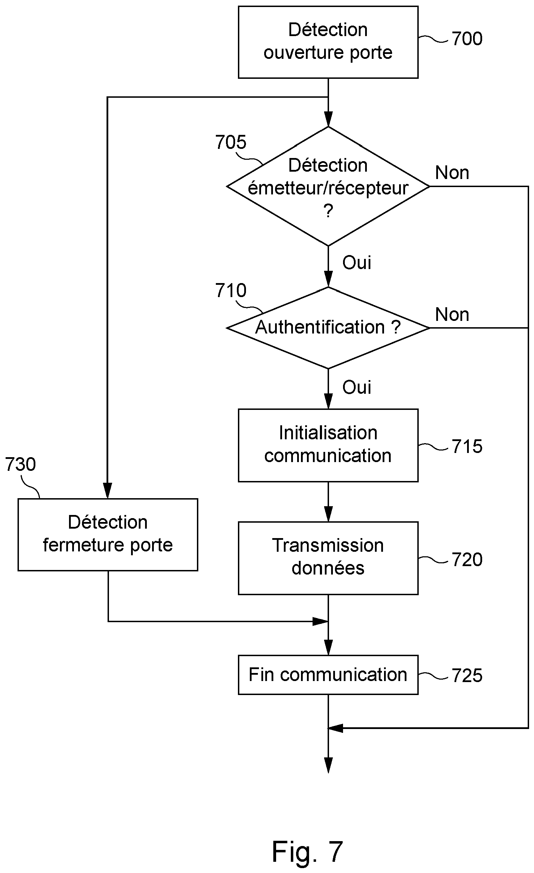

La figure 7 illustre un exemple d'algorithme pouvant être mis en oeuvre dans l'aéronef pour permettre un échange de données avec une structure au sol lorsque celui est en stationnement.

Après avoir détecté l'ouverture de la porte dans laquelle ou à proximité de laquelle est positionnée l'antenne 115 (étape 700), une requête est transmise par le système informatique 620 à travers le routeur 615, l'émetteur/récepteur 610 et l'antenne 115 pour détecter la présence éventuelle d'un émetteur/récepteur 630 au sol (étape 705). Si aucune réponse à cette requête n'est reçue, le système informatique 620 en déduit l'absence de dispositif de communication dans la structure au sol et le processus de communication s'arrête. Plusieurs tentatives de connexion peuvent être réalisées. Par exemple, trois requêtes espacées d'une minute peuvent être émises.

Si, au contraire, le système informatique 620 reçoit une réponse à la requête, une étape d'authentification est lancée (étape 710). L'étape d'authentification peut consister, par exemple, à transmettre un message comprenant une signature, l'authentification de la signature étant réalisée avec une clé publique. A la réception du message signé, le système informatique de la structure au sol peut authentifier l'aéronef et, en réponse, transmettre un message signé à celui-ci qui peut alors, à son tour, authentifier le système au sol.

Si l'aéronef n'authentifie pas le système au sol ou si le système au sol ne répond pas à la demande d'authentification, le processus de communication s'arrête.

Au contraire, si l'aéronef authentifie le système au sol, la communication entre l'aéronef et le système au sol est établie (étape 715) et des données peuvent être échangées entre le système informatique de l'aéronef et celui de la structure au sol (étape 720). Les données sont ici transférées selon un mécanisme et des protocoles de communication standard.

Lorsque le transfert de données est terminé, il est mis fin à la communication (étape 725).

Parallèlement, si le dispositif de commande 625 détecte la fermeture de la porte dans laquelle ou à proximité de laquelle est positionnée l'antenne 115 (étape 730), il est mis fin à la communication (étape 725).

Naturellement, pour satisfaire des besoins spécifiques, une personne compétente dans le domaine de l'invention pourra appliquer des modifications dans la description précédente. En particulier, l'invention peut être mise en oeuvre entre deux véhicules arrêtés à proximité l'un de l'autre.

## Revendications

1. Système de communication sans fil à haut débit pour structure et véhicule (100) en stationnement devant ladite structure, ledit ensemble comprenant un premier dispositif de communication et un premier système informatique (620), lesdits premiers dispositif de communication et système informatique appartenant à un véhicule, et un second dispositif de communication et un second système informatique, lesdits seconds dispositif de communication et système informatique appartenant à une structure (130) distincte dudit véhicule, pour échanger des données entre lesdits premier et second systèmes informatiques via une communication sans fil à haut débit entre lesdits premier et second dispositifs de communication, chacun desdits premier et second dispositifs de communication comprenant respectivement au moins une première, une seconde antenne (115, 120) et au moins un premier, un second émetteur/récepteur (610, 630) relié respectivement à ladite au moins une première, seconde antenne et audit premier, second système informatiques, ladite au moins une première antenne étant positionnée à proximité de ladite au moins une seconde antenne et permettant un échange de données selon un mode de communication point-à-point de faible portée de type *Wireless Personal Area Network* et à bande ultra-large, ladite structure étant une partie d'aéroport, ladite au moins une seconde antenne et ledit au moins un second émetteur/récepteur étant positionnés en bout de passerelle de telle sorte qu'une porte du véhicule (100) soit en regard dudit bout de passerelle.

2. Système selon la revendication 1 selon lequel ladite au moins une première antenne est positionnée en vue directe de ladite au moins une seconde antenne.

3. Système selon la revendication 1 ou la revendication 2 comprenant en outre des moyens de commande (625) adaptés à activer ledit premier émetteur/récepteur selon un état particulier dudit véhicule.

4. Système selon l'une quelconque des revendications 1 à 3 selon lequel ledit véhicule est un aéronef, ladite au moins une première antenne étant placée dans une porte passager dudit aéronef, vers l'intérieur ou vers l'extérieur dudit aéronef, sur un montant de ladite porte, sur un hublot de ladite porte ou dans le fuselage dudit aéronef, à proximité de ladite porte, vers l'extérieur dudit aéronef.

5. Système selon l'une quelconque des revendications précédentes, ladite au moins une première antenne étant protégée par un matériau sensiblement perméable aux ondes radio.

6. Système selon l'une quelconque des revendications précédentes selon lequel au moins l'une desdites au moins une première et seconde antennes est une antenne de type antenne patch en spirale équiangulaire ou une antenne biconique.

7. Système selon l'une quelconque des revendications précédentes selon lequel au moins l'une desdites au moins une première et seconde antennes est une antenne directionnelle.

## Patentansprüche

1. System zur drahtlosen Hochgeschwindigkeitskommunikation für eine Struktur und ein vor dieser Struktur parkendes Fahrzeug (100), wobei die Anordnung eine erste Kommunikationsvorrichtung und ein erstes Computersystem (620) umfasst, wobei die erste Kommunikationsvorrichtung und das erste Computersystem zu einem Fahrzeug gehören, und eine zweite Kommunikationsvorrichtung und ein zweites Computersystem, wobei die zweite Kommunikationsvorrichtung und das zweite Computersystem zu einer Struktur (130) gehören, die verschieden von dem Fahrzeug ist, um Daten zwischen diesen ersten und zweiten Computersystemen über eine drahtlose Hochgeschwindigkeitskommunikation zwischen den ersten und zweiten Kommunikationsvorrichtungen auszutauschen, wobei jede der ersten und zweiten Kommunikationsvorrichtungen jeweils mindestens eine erste, eine zweite Antenne (115, 120) umfasst und mindestens einen ersten, einen zweiten Sender/Empfänger (610, 630), der jeweils mit der mindestens einen ersten, zweiten Antenne und mit dem ersten, zweiten Computersystem verbunden ist, wobei die mindestens eine erste Antenne in der Nähe der mindestens einen zweiten Antenne angeordnet ist und einen Datenaustausch nach einem ultraweitbandigen Punkt-zu-Punkt-Kommunikationsmodus mit geringer Reichweite vom Typ Wireless Personal Area Network ermöglicht, wobei die Struktur ein Flughafenteil ist, wobei die mindestens eine zweite Antenne und der mindestens eine zweite Sender/Empfänger am Ende der Fluggastbrücke derart angeordnet sind, dass eine Tür des Fahrzeugs (100) gegenüber dem Ende der Fluggastbrücke liegt.

2. System nach Anspruch 1, wobei die mindestens eine erste Antenne in direkter Sicht der mindestens einen zweiten Antenne angeordnet ist.

3. System nach Anspruch 1 oder Anspruch 2, umfassend darüber hinaus Schaltmittel (625), die geeignet sind, den ersten Sender/Empfänger gemäß einem besonderen Zustand des Fahrzeugs zu aktivieren.

4. System nach einem der Ansprüche 1 bis 3, wobei das Fahrzeug ein Flugzeug ist, wobei die mindestens eine erste Antenne in einer Fluggasttür des Flugzeugs zur Innenseite oder zur Außenseite des Flugzeugs hin an einem Pfosten der Tür, an einem Fenster der Tür oder im Rumpf des Flugzeugs in der Nähe der Tür zur Außenseite des Flugzeugs hin angeordnet ist.

5. System nach einem der vorhergehenden Ansprüche, wobei die mindestens eine erste Antenne durch ein Material geschützt ist, das im Wesentlichen durchlässig für Funkwellen ist.

6. System nach einem der vorhergehenden Ansprüche, wobei mindestens eine der mindestens ersten und zweiten Antennen eine Antenne vom Typ einer winkelkonstanten Spiral-Patchantenne oder eine bikonische Antenne ist.

7. System nach einem der vorhergehenden Ansprüche, wobei mindestens eine der mindestens ersten und zweiten Antennen eine Richtantenne ist.

## Claims

1. Wireless high-throughput communication system for a structure and a vehicle (100) parked in front of said structure, said assembly comprising a first communication device and a first computer system (620), said first communication device and said first computer system belonging to a vehicle, and a second communication device and a second computer system, said second communication device and said second computer system belonging to a structure (130) that is separate from said vehicle, in order to allow data to be exchanged between said first and second computer systems via high-throughput wireless communication between said first and second communication devices, each of said first and second communication devices respectively comprising at least one first, one second antenna (115, 120) and at least one first, one second transmitter/receiver (610, 630) respectively connected to said at least one first, one second antenna and to said first, said second computer system, said at least one first antenna being positioned in proximity to said at least one second antenna and allowing data to be exchanged via a short-range point-to-point ultra-wideband communication mode of the wireless-personal-area-network type, said structure being a portion of an airport, said at least one second antenna and said at least one second transmitter/receiver being positioned at the end of a jetway such that a door of the vehicle (100) is located facing said end of said jetway.

2. System according to Claim 1, wherein said at least one first antenna is positioned in direct sight of said at least one second antenna.

3. System according to Claim 1 or Claim 2, furthermore comprising controlling means (625) suitable for activating said first transmitter/receiver depending on a particular state of said vehicle.

4. System according to any one of Claims 1 to 3, wherein said vehicle is an aircraft, said at least one first antenna being placed in a passenger door of said aircraft, toward the interior or toward the exterior of said aircraft, on a jamb of said door, on a porthole of said door or in the fuselage of said aircraft, in proximity to said door, toward the exterior of said aircraft.

5. System according to any one of the preceding claims, said at least one first antenna being protected by a material that is substantially permeable to radio waves.

6. System according to any one of the preceding claims, wherein at least one of said at least one first and second antennae is an equiangular spiral patch antenna or a biconical antenna.

7. System according to any one of the preceding claims, wherein at least one of said at least one first and second antennae is a directional antenna.
